# EUROPÄISCHE PATENTSCHRIFT

(11) **EP 3 458 921 B1**
(45) Veröffentlichungstag und Bekanntmachung des Hinweises auf die Patenterteilung: **31.03.2021**
(21) Anmeldenummer: 17723052.1
(22) Anmeldetag: 05.05.2017
(51) Int. Cl.: G06F 8/34, G05B 15/02

(54) **SYSTEM ZUR IMPLEMENTIERUNG EINES VERFAHRENSTECHNISCHEN PROZESSES AUF EINEM HAUSGERÄT**
SYSTEM FOR IMPLEMENTING A TECHNICAL PROCESS ON A DOMESTIC APPLIANCE
SYSTÈME DE MISE EN OEUVRE D'UN PROCESSUS D'INGÉNIERIE SUR UN APPAREIL ÉLECTROMÉNAGER

(30) Priorität: 17.05.2016 DE 102016208382
(43) Veröffentlichungstag der Anmeldung: 27.03.2019
(73) Patentinhaber: BSH Hausgeräte GmbH, 81739 München (DE)
(72) Erfinder: PFEIFFERER, Markus, 93138 Lappersdorf (DE); SEIBERT, Christian, 82299 Türkenfeld (DE)
(86) Internationale Anmeldenummer: PCT/EP2017/060818
(87) Internationale Veröffentlichungsnummer: WO 2017/198482

(56) Entgegenhaltungen:
- EP-A1- 2 320 401
- DE-T2- 69 836 234
- US-A1- 2007 142 022

## Beschreibung

Die Erfindung betrifft ein System zur Implementierung eines verfahrenstechnischen Prozesses auf einem Hausgerät, insbesondere auf einem Haushaltsgerät. Des Weiteren betrifft die Erfindung ein Hausgerät, mit einem durch das System bereitgestellten verfahrenstechnischen Prozess.

Hausgeräte weisen eine Verfahrenstechnik mit stetig steigender Komplexität auf. Beispielsweise können einzelne Hausgeräte mehrere Duzend Sensoren und Aktuatoren und zehntausende operative Parameter bzw. Prozessparameter aufweisen. Mit steigender Komplexität steigt der Bedarf an Systemen, die es einem Verfahrenstechnik Entwickler ohne Software Entwicklungskenntnisse ermöglichen, Programme zur Steuerung eines Hausgeräts zu erstellen und bei Bedarf abzuändern. Nach Möglichkeit sollten dabei Systeme bereitgestellt werden, die es einem Entwickler ermöglichen, in einfacher und intuitiver Weise verfahrenstechnische Prozesse für unterschiedliche Typen von Hausgeräten zu beschreiben. Die derart beschriebenen verfahrenstechnischen Prozesse sollten dann durch das System in autonomer und zuverlässiger Weise auf ihre Funktionalität geprüft und in Code (insbesondere in Software Code bzw. in einen Code mit Steueranweisungen für einen Prozessor) umgewandelt werden, der durch ein oder mehrere Prozessoren eines Hausgeräts ausgeführt werden kann, um einen bestimmten verfahrenstechnischen Prozess auf einem Hausgerät (z.B. einen bestimmten Brühprozess, einen bestimmten Waschprozess, etc.) zu realisieren. EP 2 320 401 A1 beschreibt ein Verfahren zur Übertragung von Anweisungen zwischen Komponenten in einem Haus-Netzwerk. US 2007/142022 A1 beschreibt ein integriertes Multimedia Kommunikationssystem. DE 698 36 234 T2 beschreibt ein Verfahren zur Kommunikation in einem Hausnetz.

Das vorliegende Dokument befasst sich mit der technischen Aufgabe, ein System bereitzustellen, das es einem Entwickler ermöglicht, in intuitiver und zuverlässiger Weise verfahrenstechnische Prozesse eines Hausgeräts zu beschreiben und basierend darauf Code zur Steuerung des Hausgeräts bereitzustellen.

Die Aufgabe wird durch den Gegenstand des unabhängigen Patentanspruchs 1 gelöst. Vorteilhafte Ausführungsformen sind insbesondere in den abhängigen Patentansprüchen definiert, in nachfolgender Beschreibung beschrieben oder in den beigefügten Zeichnungen dargestellt.

Es wird ein System zur Implementierung eines verfahrenstechnischen Prozesses auf einem Hausgerät, insbesondere auf einem Haushaltsgerät, beschrieben. Das Hausgerät kann einem Hausgeräte-Typ aus einer Mehrzahl von unterschiedlichen Typen entsprechen, wobei die Mehrzahl von Typen von Hausgeräten beispielsweise Waschmaschinen, Wäschetrockner, Kaffeevollautomaten, Spülmaschinen, Öfen, und/oder Kühlgeräte umfasst. Beispiele für einen verfahrenstechnischen Prozess sind ein Waschprogramm für eine Waschmaschine oder ein Brühprogramm für einen Kaffeevollautomaten. Ein Hausgerät ist typischerweise auf ein oder mehrere Aufgaben ausgerichtet bzw. für ein oder mehrere Aufgaben vorgesehen (z.B. eine Kaffeemaschine zum Brühen eines Kaffees, eine Waschmaschine zum Waschen von Wäsche, etc.). Ein verfahrenstechnischer Prozess eines Hausgeräts kann einen Prozess beschreiben, mit dem eine Aufgabe des Hausgeräts ausgeführt wird. Insbesondere kann ein verfahrenstechnischer Prozess über die Bereitstellung einer Nutzerschnittstelle des Hausgeräts hinausgehen. Ein verfahrenstechnischer Prozess kann vielmehr beschrieben, wie ein oder mehrere Prozessparameter (die ggf. über eine Nutzerschnittstelle erfasst werden) zur Erfüllung einer Aufgabe des Hausgeräts genutzt werden.

Das System umfasst einen graphischen Editor, der es ermöglicht, den verfahrenstechnischen Prozess anhand von graphischen Elementen zu beschreiben, um eine graphische Repräsentation des verfahrenstechnischen Prozesses zu erstellen. Der graphische Editor kann auf einem externen Computer (außerhalb des Hausgeräts) bereitgestellt werden. Insbesondere können mittels des graphischen Editors vordefinierte graphische Elemente miteinander verkettet werden, um die graphische Repräsentation des verfahrenstechnischen Prozesses zu erstellen. Dabei können ggf. auch Teilprozesse und Subprozesse definiert werden, die wiederum bei der Definition von übergeordneten Prozessen verwendet werden können. Des Weiteren können für die einzelnen vordefinierte graphische Elemente Prozessparameter festgelegt werden, um den verfahrenstechnischen Prozess zu definieren.

Das System umfasst weiter eine Übersetzereinheit (z.B. auf einem externen Computer), die eingerichtet ist, die einzelnen graphischen Elemente der graphischen Repräsentation des verfahrenstechnischen Prozesses in die Anweisungen einer Meta-Sprache zu überführen, um eine Meta-Sprach-Datei zu erstellen, die den verfahrenstechnischen Prozess in der Meta-Sprache beschreibt. Dabei kann für jedes graphische Element eine Menge von Anweisungen in der Meta-Sprache hinterlegt sein. Die Anweisungen können mit den in der graphischen Repräsentation festgelegten Prozessparametern konkretisiert werden, um die Meta-Sprach-Datei für den verfahrenstechnischen Prozess zu beschreiben.

Das System umfasst weiter einen Interpreter, der eingerichtet ist, die Anweisungen der Meta-Sprach-Datei (insbesondere während des Betriebs des Hausgeräts) in Hausgeräte-Typ-spezifischen Code zur Ausführung des verfahrenstechnischen Prozesses auf dem Hausgerät zu überführen. Der Interpreter kann auf dem Hausgerät bereitgestellt werden. Die Anweisungen der Meta-Sprach-Datei können während des Betriebs des Hausgeräts in Echtzeit in Hausgeräte-Typ-spezifischen Code überführt werden.

Somit kann durch das System in effizienter Weise Code für den verfahrenstechnischen Prozess eines Hausgeräts erstellt werden. Dabei kann durch den Interpreter eine Abstraktion der technischen Eigenschaften der unterschiedlichen Typen von Hausgeräten bereitgestellt werden, so dass mit einer einheitlichen Meta-Sprache in intuitiver und zuverlässiger Weise Code für unterschiedliche Typen von Hausgeräten erstellt werden kann. Insbesondere kann die Meta-Sprache derart ausgelegt sein, dass mit der Meta-Sprache verfahrenstechnische Prozesse einer Vielzahl von Typen von Hausgeräten beschrieben werden können. Die Meta-Sprache kann somit unabhängig von einem Typ von Hausgerät sein. Andererseits kann der Interpreter von einem Typ des Hausgeräts aus der Vielzahl von Typen von Hausgeräten abhängen und somit die Typ-unabhängigen Anweisungen der Meta-Sprache in Typ-spezifischen Code zur Steuerung eines bestimmten Typs von Hausgerät überführen.

Das System umfasst ferner eine Überprüfungseinheit (z.B. auf einem externen Computer), die eingerichtet ist, zu überprüfen, ob die graphische Repräsentation des verfahrenstechnischen Prozesses in dem Hausgerät umgesetzt werden kann. Dabei umfasst die Überprüfungseinheit ein auf künstlicher Intelligenz basiertes Expertensystem. So kann gewährleistet werden, dass auch ein Nutzer des Systems, der keine spezifischen Kenntnisse über die technischen Eigenschaften eines Hausgeräts besitzt, in effizienter Weise einen lauffähigen verfahrenstechnischen Prozess für das Hausgerät erstellen kann.

Die Meta-Sprache umfasst typischerweise eine Vielzahl von unterschiedlichen Anweisungen, z.B.: Anweisungen, die einen Zugriff auf die Sensoren des Hausgeräts ermöglichen; Anweisungen, die eine Ansteuerung der Aktuatoren des Hausgeräts ermöglichen; Anweisungen, die eine Verzögerung von Prozessschritten des verfahrenstechnischen Prozesses ermöglichen; Anweisungen, die eine bedingte Ausführung von Prozessschritten des verfahrenstechnischen Prozesses ermöglichen; Anweisungen, die einen Zugriff auf eine Eingabeeinheiten des Hausgeräts ermöglichen; und/oder eine Anweisungen, die eine Ansteuerung der Ausgabeeinheit des Hausgeräts ermöglichen. Durch die Bereitstellung eines umfangreichen Satzes von abstrakten Anweisungen können in einfacher Weise komplexe verfahrenstechnische Prozesse für unterschiedliche Typen von Hausgeräten erstellt werden.

Der Interpreter kann ein auf künstlicher Intelligenz basiertes Expertensystem umfassen. Insbesondere kann der Interpreter Expertenwissen verwenden, um abstrakte Anweisungen einer Meta-Sprache in Hausgeräte-Typ-spezifischen Code zu überführen.

Das Hausgerät kann eine Vielzahl von Hardware-Modulen mit jeweils ein oder mehreren Prozessoren beinhalten. Die Hardware-Module können jeweils einen Interpreter umfassen, um zumindest einen Teil der Anweisungen der Meta-Sprach-Datei auszuführen. Durch die interagierende Ausführung der Anweisungen einer Meta-Sprach-Datei auf unterschiedlichen Hardware-Modulen eines Hausgeräts kann die Funktionssicherheit des Hausgeräts erhöht werden.

Gemäß eines weiteren Aspekts wird ein Hausgerät mit zumindest einem Hardware-Modul beschrieben. Das Hardware-Modul umfasst einen Interpreter, der eingerichtet ist, Anweisungen einer Meta-Sprach-Datei zur Ausführung eines verfahrenstechnischen Prozesses auf dem Hausgerät umzusetzen. Dabei entstammen die Anweisungen der Meta-Sprach-Datei einer Meta-Sprache, die derart ausgelegt ist, dass mit der Meta-Sprache verfahrenstechnische Prozesse einer Vielzahl von Typen von Hausgeräten beschrieben werden können. Durch die Verwendung einer derartigen abstrakten Meta-Sprache für die Steuerung eines Hausgeräts können die Kosten für die Bereitstellung von verfahrenstechnischen Prozessen auf einem Hausgerät reduziert werden. Des Weiteren werden eine flexible Bereitstellung und Anpassung von verfahrenstechnischen Prozessen ermöglicht. Die Meta-Sprache kann dabei bevorzugt derart ausgelegt sein, dass mit der Meta-Sprache verfahrenstechnische Prozesse einer Vielzahl von unterschiedlichen Typen von Hausgeräten beschrieben werden können. Des Weiteren kann der Interpreter von einem Typ des Hausgeräts aus der Vielzahl von Typen von Hausgeräten abhängen.

Das Hausgerät kann eine Mehrzahl von Hardware-Modulen mit jeweils ein oder mehreren Prozessoren umfassen. Dabei können die Mehrzahl von Hardware-Modulen über einen Datenbus Daten untereinander austauschen. Die Hardware-Module können jeweils einen Interpreter umfassen, um zumindest einen Teil der Anweisungen der Meta-Sprach-Datei auszuführen. Das Hausgerät kann dabei eingerichtet sein, die Umsetzung der Anweisungen der Meta-Sprach-Datei auf die Interpreter der Mehrzahl von Hardware-Modulen zu verteilen. So kann die Funktionssicherheit des Hausgeräts in effizienter Weise erhöht werden.

Gemäß einem weiteren Aspekt wird ein dem o.g. System entsprechendes Verfahren beschrieben.

Es ist zu beachten, dass jegliche Aspekte der in diesem Dokument beschriebenen Systeme, Verfahren und Hausgeräte in vielfältiger Weise miteinander kombiniert werden können. Insbesondere können die Merkmale der Patentansprüche in vielfältiger Weise miteinander kombiniert werden.

Im Weiteren wird die Erfindung anhand von in den beigefügten Zeichnungen dargestellten Ausführungsbeispielen näher beschrieben. Dabei zeigen
- Figur 1: ein Blockdiagramm eines Systems zur Erstellung von Code für einen verfahrenstechnischen Prozess eines Hausgeräts;
- Figuren 2a bis 2c: beispielhafte graphische Elemente zur Beschreibung eines verfahrenstechnischen Prozesses;
- Figur 3: eine beispielhafte Konvertierung eines graphischen Elements in Anweisungen einer Meta-Sprache; und
- Figuren 4a und 4b: ein beispielhaftes Prozessorsystem eines Hausgeräts zur Ausführung einer Meta-Sprach-Datei für einen verfahrenstechnischen Prozess des Hausgeräts.

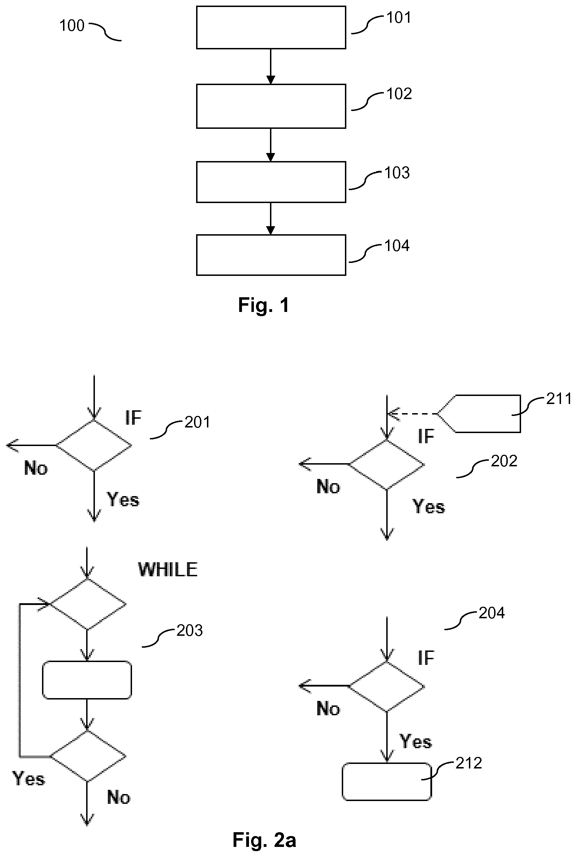

Wie eingangs dargelegt, befasst sich das vorliegende Dokument mit der intuitiven und effizienten Erstellung von SW-Code für unterschiedliche verfahrenstechnische Prozesse von unterschiedlichen Hausgeräten. In diesem Zusammenhang zeigt Fig. 1 ein Blockdiagramm eines beispielhaften System 100 zur Erstellung von Code für einen verfahrenstechnischen Prozess eines Hausgerätes. Das System 100 umfasst einen graphischen Editor 101, der es ermöglicht, einen verfahrenstechnischen Prozess (z.B. einen Brühprozess eines Kaffeevollautomaten und/oder einen Waschprozess einer Waschmaschine) anhand von graphischen Elementen zu beschreiben. Mittels eines Überprüfungsmoduls 102 kann ein auf Basis von graphischen Elementen beschriebener Prozess überprüft werden. Dabei umfasst das Überprüfungsmodul 102 ein Expertensystem, dass eingerichtet ist, den graphisch beschriebenen Prozess auf Konsistenz und Integrität zu überprüfen. So kann sichergestellt werden, dass mittels des graphischen Editors 101 graphisch beschriebene Prozesse (d.h. graphische Repräsentationen eines verfahrenstechnischen Prozesses) erstellt werden, die auch tatsächlich durch ein bestimmtes Hausgerät umgesetzt werden können.

Die graphischen Elemente eines graphisch beschriebenen Prozesses können mittels eines Übersetzungsmoduls 103 in eine Meta-Sprach-Datei überführt werden. Insbesondere kann jedes graphische Element in eine Abfolge von SW (Software)-Anweisung in einer Meta-Sprache übersetzt werden, so dass der graphisch beschriebene Prozess durch das Übersetzungsmodul 103 in eine Meta-Sprach-Datei überführt wird. Die Meta-Sprach-Datei beschreibt den verfahrenstechnischen Prozess in der Meta-Sprache. Mittels eines Interpreters 104 für diese Meta-Sprache kann Code generiert werden, der durch ein oder mehrere Prozessoren eines Hausgeräts ausgeführt werden kann, um den verfahrenstechnischen Prozess auf dem Hausgerät zu implementieren.

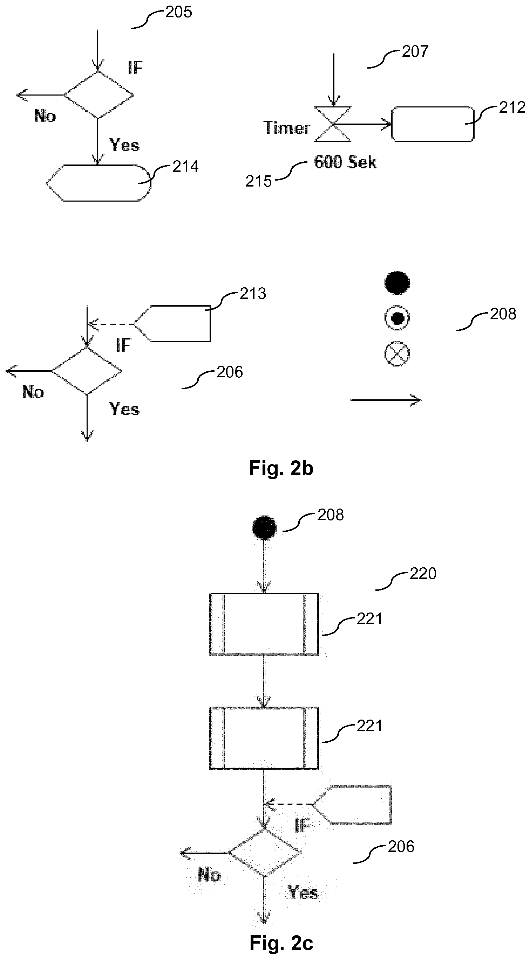

Die Figuren 2a und 2b zeigen beispielhafte unterschiedliche graphische Elemente 201, 202, 203, 204, 205, 206, 207, 208, die dazu verwendet werden können, einen verfahrenstechnischen Prozess graphisch zu beschreiben. Dabei beschreiben
- die graphischen Elemente 201, 203 Befehle bzw. Anweisungen für eine Entscheidungsschleife;
- das graphische Element 202 einen Befehl bzw. eine Anweisung für den Zugriff auf einen Messwert eines Sensors 211 eines Hausgeräts;
- das graphische Element 204 einen Befehl bzw. eine Anweisung zur Ansteuerung eines Aktuators 212 eines Hausgeräts;
- das graphische Element 205 einen Befehl bzw. eine Anweisung zur Ansteuerung einer Ausgabeeinheit 214 (z.B. eines Bildschirms oder einer LED) eines Hausgeräts;
- das graphische Element 206 einen Befehl bzw. ein Anweisung zur Erfassung einer Eingabe eines Nutzers über eine Eingabeeinheit 213 (z.B. eine Taste) eines Hausgeräts;
- das graphische Element 207 einen Befehl bzw. eine Anweisung zur Festlegung eines Timers bzw. einer Verzögerung (z.B. vor Ansteuerung eines Aktuators 212), wobei als beispielhafter Prozessparameter 215 ein Verzögerungswert festgelegt werden kann;
- die graphischen Elemente 208 diverse Befehle bzw. Anweisungen, wie einen Prozess-Start, ein Prozess-Ende, ein Unterprozess-Ende und einen Aufruf eines Prozesses.

Die graphischen Elemente 201, 202, 203, 204, 205, 206, 207, 208 können, wie beispielhaft in Fig. 2c dargestellt, in dem graphischen Editor 101 miteinander verknüpft werden, um eine graphische Repräsentation 220 eines verfahrenstechnischen Prozesses zu erstellen. Dabei können auch Teilprozesse 221 integriert werden, die ggf. selbst durch graphische Elemente 201, 202, 203, 204, 205, 206, 207, 208 beschrieben wurden. So können in effizienter Weise verfahrenstechnische Prozesse graphisch beschrieben werden.

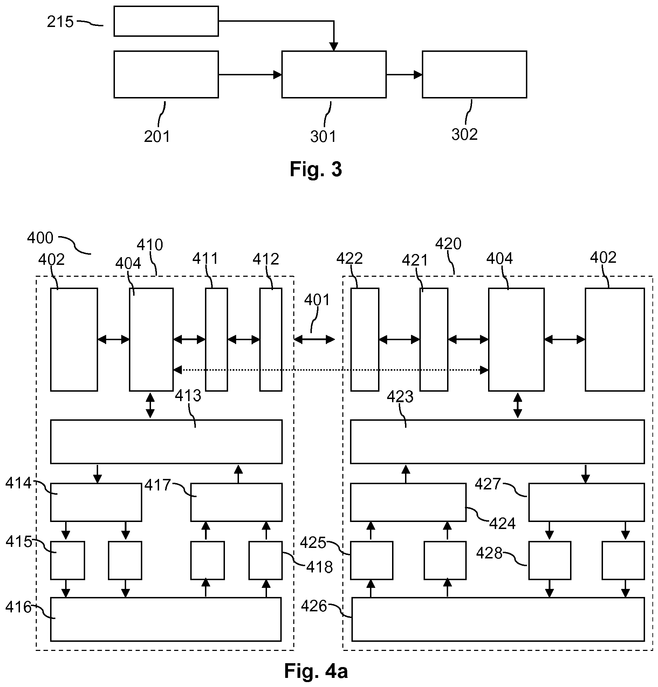

Für jedes graphische Element 201, 202, 203, 204, 205, 206, 207, 208 können Programmschritte bzw. Anweisungen in einer Meta-Sprache in dem System 100 und insbesondere in dem Übersetzungsmodul 103 hinterlegt sein. Dies ist beispielhaft in Fig. 3 dargestellt. Für das graphische Element 201 sind neutrale Meta-Sprachen-Programmschritte bzw. Anweisungen 301 hinterlegt, die mit konkreten Prozessparametern 215 aus dem graphisch dargestellten verfahrenstechnischen Prozess ergänzt werden können, um ein oder mehrere Meta-Sprachen-Programmabschnitte bzw. Anweisungen 302 in der Meta-Sprache zu ermitteln. In entsprechender Weise können alle graphischen Elemente 201, 202, 203, 204, 205, 206, 207, 208 eines graphisch dargestellten verfahrenstechnischen Prozesses in Meta-Sprachen-Programmabschnitte bzw. Anweisungen 302 überführt werden, um eine Meta-Sprach-Datei für den verfahrenstechnischen Prozess zu erstellen. Diese Meta-Sprach-Datei kann mittels des Interpreters in spezifischen Code für ein oder mehrere Prozessoren eines Hausgeräts umgewandelt werden, um den verfahrenstechnischen Prozess auf dem Hausgerät zu implementieren.

Figur 4a zeigt eine beispielhafte Implementierung eines verfahrenstechnischen Prozesses auf zwei separaten Modulen 410, 420 eines Hausgeräts 400, wobei die Module 410, 420 über einen Datenbus 401 Daten austauschen können. Jedes der Module 410, 420 umfasst zumindest einen eigenen Prozessor, der eingerichtet ist, SW-Code auszuführen, der auf Basis einer Meta-Sprach-Datei 402 für den verfahrenstechnischen Prozess für den jeweiligen Prozessor generiert wird. Das Modul 410 kann z.B. zur Steuerung einer Benutzerschnittstelle verwendet werden und das Modul 420 kann z.B. zur Steuerung der Energieversorgung des Hausgeräts 400 verwendet werden.

Das Modul 420 umfasst einen Interpreter 104, 404, der eingerichtet ist, die Meta-Sprach-Datei 402 zu interpretieren, um Code zu generieren, die durch den Prozessor des Moduls 420 ausgeführt werden kann. Insbesondere kann der Code von einem Prozess-Kontroll-Manager 423 des Moduls 420 ausgeführt werden, der ggf. über eine Zwischenschicht 424 Messwerte von Sensoren 425 beziehen kann bzw. ggf. über eine Zwischenschicht 427 Anweisungen an Aktuatoren 428 senden kann. Die eigentliche Steuerung der Hardware Komponenten des Hausgeräts 400 kann über eine Hardware-Abstraktions-Schicht 426 erfolgen. Des Weiteren weist das Modul 420 einen Kommunikations-Manager 421 und eine Datenbus-Abstraktions-Schicht 422 auf, um über den Datenbus 401 Daten auszutauschen.

In analoger Weise kann das Modul 410 einen Interpreter 404 umfassen, der eingerichtet ist, die Meta-Sprache-Datei 402 zu interpretieren, um SW-Code zu generieren, die durch den Prozessor des Moduls 410 ausgeführt werden kann. Insbesondere kann der SW-Code von einem Benutzerschnittstellen-Kontroll-Manager 413 des Moduls 410 ausgeführt werden, der ggf. über eine Zwischenschicht 417 Eingabewerte von ein oder mehreren Eingabeeinheiten 418 beziehen kann bzw. ggf. über eine Zwischenschicht 414 Ausgabewerte an ein oder mehrere Ausgabeeinheiten 415 senden kann. Die eigentliche Steuerung der Hardware Komponenten des Hausgeräts 400 kann über eine Hardware-Abstraktions-Schicht 416 erfolgen. Des Weiteren weist das Modul 410 einen Kommunikations-Manager 411 und eine Datenbus-Abstraktions-Schicht 412 auf, um über den Datenbus 401 Daten auszutauschen.

Es wird somit eine Meta-Verfahrenstechnik-Sprache verwendet, die für den Verfahrenstechniker eines Hausgeräts 400 einen direkten Zugriff auf alle relevanten Funktionen des Hausgeräts 400 schafft. Die Meta-Verfahrenstechnik-Sprache ist dabei bevorzugt: selbst erklärend, und schnell und direkt auf die ein oder mehreren Module 410, 420 eines Hausgeräts 400 portierbar; und/oder für unterschiedliche Typen von Hausgeräten 400 (z.B. Waschmaschinen, Backöfen, Spülmaschinen, Kaffeevollautomaten, etc.) in gleicher Form nutzbar.

Zur Erstellung von Meta-Sprach-Dateien 402 wird ein einfach zu nutzender grafischer Verfahrenstechnik Editor 101 bereitgestellt, der komplexe Prozess-Strukturen mit grafischen Elementen 201, 202, 203, 204, 205, 206, 207, 208 visualisiert und der ggf. auf die Anforderungen des jeweiligen Typs von Hausgerät 400 angepasst werden kann.

Des Weiteren kann ein einheitlicher und einfacher Pfad bereitgestellt werden, um eine Verfahrenstechnik-Meta-Sprach-Datei 402 sicher und zuverlässig in die Produktionssoftware eines Hausgeräts 400 oder in eine (online oder offline) Service Support Funktion zu pflegen. Dabei kann insbesondere die Update Fähigkeit aller Steuerungs-relevanten und Nutzer-Interaktions- relevanten Prozessanteile gewährleistet werden.

Außerdem kann ein Hausgeräte-übergreifender Verfahrenstechnik-Interpreter 104, 404 bereitgestellt werden, der eine schnelle Integration einer Verfahrenstechnik Meta-Sprach-Datei 402 in die Software Plattformen von unterschiedlichen Typen von Hausgeräten 400 ermöglicht. Dabei kann insbesondere gewährleistet werden: eine schnelle Updatefähigkeit der Produkt Verfahrenstechnik; ein modularer Aufbau der Verfahrenstechnik Meta-Sprach-Datei 402 für ein segmentweises Update einzelner Prozessanteile; das Ermöglichen einer hohen Diversifikation der Hausgeräte 400 über unterschiedliche verfahrenstechnische Prozesse mit gleichbleibender Hardware-Abstraktions-Schicht 416, 426 und Kontroll-Schicht 413, 423; und/oder ein schneller Zugriff der Verfahrenstechnik auf Änderungen eines Hausgeräts 400 bzw. eine Minimalisierung von Eingriffen durch die Embedded Software Entwicklung.

Die Bereitstellung einer Verfahrenstechnik Meta-Sprache, die Bereitstellung eines grafischen Verfahrenstechnik Editors 101, die Bereitstellung eines einheitlichen Verfahrenstechnik Integrations-Prozesses und/oder die Bereitstellung eines Verfahrenstechnik-Interpreters 104, 404 haben eine Vielzahl von Vorteilen: eine Reduzierung von Verfahrenstechnik Integrations-Zeiten; eine sichere und automatische Migration der Verfahrenstechnik in SW-Code für ein Hausgerät 400 (insbesondere ohne manuellen Eingriff); reduzierte Integrationszeiten, so dass ein Verfahrenstechniker einen neuen verfahrenstechnischen Prozess direkt an einem Hausgerät 400 testen kann; reduzierte Testanforderungen und ein vereinfachtes Testkonzept durch die Verfahrenstechnik Meta-Sprache; erhöhte Produktsicherheit; beschleunigte Updatefähigkeit von verfahrenstechnischen Prozessen; erhöhte Diversifikation von Prozessvarianten z.B. für unterschiedliche Länder mit gleichbleibender Hardware-Abstraktions-Schicht und Kontroll-Schicht; und/oder ein modularer Aufbau der Verfahrenstechnik Meta-Sprach-Datei 402 für einen Segment-weisen Update einzelner Prozessanteile.

Um eine grafische Beschreibung eines verfahrenstechnischen Prozesses (z.B. KaffeeBrühprozess, Wasch- und Spülprozesse, Kühl-Prozesse) in einen Code für ein Hausgerät 400 umzusetzen, wird typischerweise menschliches Expertenwissen von unterschiedlichen Experten, z.B. eines Verfahrenstechnikers (z.B. Kältetechnik), eines Hardware Entwicklers, eines Softwareentwicklers, etc., benötigt. Dies kann zu relativ langen Entwicklungszeiten für neue verfahrenstechnische Prozesse führen.

Das System 100 kann daher ausgebildet sein, Expertenwissen zu berücksichtigen (z.B. im Rahmen der online Überprüfung eines graphisch dargestellten verfahrenstechnischen Prozesses im Überprüfungsmodul 102 und/oder im Rahmen des Interpreters 104, 404). Zu diesem Zweck kann phänomenologische künstliche Intelligenz (KI) verwendet werden.

Bei der phänomenologischen KI ist typischerweise ausschließlich das Ergebnis der Übertragung von Verfahrenstechnik auf die Logik eines Interpreters 104 404 relevant. Es wird nicht versucht, die wirkliche Ideenfindung des Entwicklers auf neuronaler Ebene oder auf Simulations-Ebene nachzuvollziehen. In einem rein ergebnisorientierten Vorgehen zählt nicht der Weg der Ideenfindung, sondern ausschließlich das Ergebnis, und dies in einer möglichst großen Tiefe und Detailgenauigkeit. Dies kann dadurch erfolgen, dass die Aktionen des menschlichen Vorbildes (d.h. eines technischen Experten) in möglichst vielen Ausgangssituationen gesammelt werden, basierend darauf Regelwerke (Axiome) erstellt werden, und diese Axiome ggf. vielfach miteinander verknüpft werden.

Im Rahmen der hier beschriebenen KI-Systeme kann Wissen von unterschiedlichen Bereichen berücksichtigt werden: Verfahrenstechniker (Experte), Zulieferer von Prozesskomponenten (z.B. ein Waschmittelhersteller für einen Waschprozess); Software Entwickler; Modul- bzw. System-Tester; und/oder Nutzer. Das KI-System kann dabei sowohl die Integrations- als auch die Test- und Anwendungsebene für ein Hausgerät 400 abbilden.

Das verfahrenstechnische Expertensystem kann insbesondere im Verfahrenstechnik-Editor 101 berücksichtigt werden, der auf einem Computer implementiert sein kann und der eingerichtet ist, eine einfache grafische Struktur eines Prozesses in ein komplexes Verfahrenstechnik-Skript (d.h. in eine Meta-Sprach-Datei 402) zu übertragen. Des Weiteren kann das verfahrenstechnische Expertensystem im Verfahrenstechnik-Interpreter 404 auf einem Modul 410, 420 eines Hausgeräts 400 berücksichtigt werden, der somit auf dem zu steuernden Hausgerät 400 ausgeführt wird und das Script (d.h. eine Meta-Sprach-Datei 402) in aktive parallele und sequentielle Operationen auf dem jeweiligen Modul 410, 420 überträgt.

Die KI des Verfahrenstechnik-Interpreters 404 umfasst z.B. einen Aktuator-Zugriff (mit einem Hardware-spezifisches Befehlsset): Eine für einen Verfahrenstechniker sehr einfache Beschreibung eines Aktuators (z.B. Heater(50) - Heizung 50 Grad), bildet typischerweise einen komplexen Steuerprozess im Interpreter 404 mit dem in der KI hinterlegten Expertenwissen über die Physik des Aktuators (z.B. die funktionelle Belastbarkeit) ab. Eine Aktuator Darstellung kann über ein abstraktes Modell vieler Sensor- und Aktuator Parameter erfolgen (z.B. kann eine Kaffee-Vollautomaten-Heizung auf Basis des Wasserdurchflusses (Durchflussmessung), der Timing- und Frequenzparameter des versorgenden Netzes, und einer Vorhersage der zur Verfügung stehenden Energie, die Temperatur des Wassers in der Brüheinheit berechnen).

Die KI des Verfahrenstechnik-Interpreters 404 umfasst z.B. einen Sensor-Zugriff (mit einem Hardware-spezifischen Befehlsset): Eine für einen Verfahrenstechniker sehr einfache Beschreibung eines Sensors (z.B. WaterFlow(50) - Fließgeschwindigkeit 50 ml/sek), bildet typischerweise einen komplexen Sensorprozess im Interpreter 404 mit der in der KI hinterlegten Physik des Sensors (z.B. Übertragung der direkt und indirekt messbaren Eingangsgrößen auf technische Messgrößen) ab (z.B. kann die Sensormenge des gemahlenen Kaffees indirekt über den statistisch steigenden Anpressdruck der Brüheinheit bei trockenem oder vorgebrühtem Kaffee berechnet werden; ein Sensor zur Messung der Menge an Kaffee kann nur als verfahrenstechnisches Modell im Interpreter 404 hinterlegt sein).

Die KI des Verfahrenstechnik-Interpreters 404 umfasst z.B. Schleifen und über- und untergeordnete Strukturen (als ein generisches Befehlsset): Der Verfahrenstechniker verwendet Schleifen mit übergeordneten und untergeordneten Strukturen typischerweise anders als der Softwareentwickler. Die KI kann die Abgrenzung und die Zuordnung von Subprozessen und korrespondierenden Prozessen in einer dem verfahrenstechnischen Verständnis angemessenen Form übernehmen.

Die KI des Verfahrenstechnik-Interpreters 404 umfasst z.B. Fallentscheidungen (als ein generisches Befehlsset): Eine Fallentscheidung in der Verfahrenstechnik ist typischerweise bedingt durch den aufrufenden Aktuator und kann eine Vielzahl unterschiedlicher Aktionen auf der Ebene des Interpreters auslösen. Der Aktuator definiert die erweiterte Funktion der Fallentscheidung.

Die KI des Verfahrenstechnik-Interpreters 404 umfasst z.B. Timing und Verzögerungen: Da ein Prozess-Scheduler den Meta-Sprach-Interpreter 404 mit einer Vielzahl anderer (paralleler) Prozesse durchläuft, ist die vom Interpreter 404 wahrgenommene Prozesszeit typischerweise nicht gleich der realen Prozessorzeit. Vielmehr steuert der Verfahrenstechnik Meta-Sprach-Interpreter 404 die den einzelnen Modulen 410, 420 zur Verfügung stehenden Maximalzeiten anhand des dem Interpreter 404 bekannten verfahrenstechnischen Ablaufes, d.h. anhand der physikalischen Einschränkungen der Hardware entsprechend, aus.

Die KI des Verfahrenstechnik-Interpreters 404 umfasst z.B. die Fehlerbehandlung: Der Verfahrenstechnik-Interpreter 404 entscheidet anhand von bestimmten Lösungsansätzen, wie ein Fehler im System behandelt wird, ob ein laufender Prozess unterbrochen wird oder nicht, und auf welcher Ebene die Fehlerbehandlung erfolgt.

Die KI des Verfahrenstechnik-Interpreters 404 umfasst z.B. Redundanzbetrachtungen: Der Verfahrenstechnik-Interpreter 404 kann anhand von zur Verfügung stehenden Ressourcen entscheiden, wie die Last auf unterschiedliche Prozessoren in einem Hausgerät 400 zu verteilen ist (z.B. zu Bereitstellung von "Fail Safety").

Die KI des grafischen Verfahrenstechnik-Editors 101 umfasst z.B.:
- Spezifische Entscheidungsmuster, die einem einzigen Symbol in Abhängigkeit von den verknüpften graphischen Elementen 201, 202, 203, 204, 205, 206, 207, 208 unterschiedliche Funktionen und Parametersätze zuweisen (z.B. einem Aktuator in Abhängigkeit von Fallentscheidung, Schleifen oder Timing Parametern);
- Ein Expertensystem, das anhand der Verknüpfung einer Vielzahl von regelbasierten Axiomen prüft, ob eine grafische Verknüpfung im Editor 101 angesichts der physikalischen, elektromechanischen Beschaffenheit eines Hausgeräts 400 zulässig ist oder nicht; und/oder
- Ein Expertensystem, das einen hoch komplexen verfahrenstechnischen Ablauf (z.B. mit mehreren Tausend verknüpften Steuerungsparameter) in einfachen grafischen Meta Strukturen visualisiert und begreifbar macht.

Die KI des Meta-Sprach-Interpreters und des Meta-Sprach-Editors löst eine Vielzahl von Problemen bei der Gerätesteuerung von unterschiedlichen Typen von Hausgeräten 400. Insbesondere machen der Verfahrenstechnik-Interpreter und der Verfahrenstechnik-Editor die immer komplizierteren Steuerungsvorgänge in stetig komplexer werdenden Hausgeräten 400 auch für Nicht-Experten begreifbar, wobei das Expertensystem die Prüfung von Systemgrenzen übernimmt und so die Verfahrenstechnik sicher macht. Des Weiteren ermöglichen es der Interpreter und der Editor Dritte auf verfahrenstechnische Prozesse zuzugreifen (z.B. einem Waschmittelhersteller ein "besonderes" Waschprogramm oder einem Kaffeehersteller einen "besonderen" Kaffeebrühprozess bereitzustellen). Außerdem ermöglichen es der Interpreter und der Editor, verfahrenstechnische Abläufe durch ein Expertensystem prüfbar und umsetzbar zu gestalten. Das Testen wird insbesondere durch den Verfahrenstechnik-Editor einfacher und effizienter. Des Weiteren ermöglichen der Interpreter und der Editor reduzierte Ausfälle von Hausgeräten 400 durch eine verbesserte Plausibilitätsprüfung der Prozesstechnik. Außerdem können komplexe Prozesstechniken schnell umgesetzt werden. Durch Weight Balanced Performance (d.h. durch eine verteilte Prozessorlast) auf unterschiedlichen Modulen 410, 420 eines Hausgeräts 400 kann eine erhöhte Fail Safety des Hausgeräts 400 bewirkt werden. Außerdem kann eine erhöhte Diversifikation bereitgestellt werden.

Wie bereits oben dargelegt, kann ein Hausgerät 400 eine Software Architektur aufweisen, die eine Basis Hardware Abstraktions-Schicht 416, 426 und eine Kontroll-Schicht 413, 423 aufweist, die alle Sensoren, Aktuatoren, Tasten, Displays und Schnittstellen in ihrer Interaktion in Software abbilden und steuern. Des Weiteren kann die Software Architektur eine Verfahrenstechnik (insbesondere eine Meta-Sprach-Datei 402) aufweisen, die Nutzer-Interaktionen und Programmabläufe (Waschprogramme, Spülprogramme, Kaffee Brühprogramme, ...) für das Hausgerät 400 darstellt.

Die Software und Verfahrenstechnik kann zumindest teilweise auf die in einen Hausgerät 400 verfügbaren Hardware-Module 410, 420 aufgebracht werden. Beispielhafte Module sind: ein Energie-Modul 420 mit Prozessablaufsteuerung; ein Benutzerschnittstellenmodul 410 mit Bedieneinheit, Display und Tastatur; ein oder mehrere Adapter Boards (Funktionsmodule zur Sensorik- und Aktuatorik- Ansteuerung); ein oder mehrere Extension Boards (erweiternde Module zur Projektion, Lichtsteuerung, Eingabe, etc.); und/oder Netzwerk-Module zur Netzwerkanbindung. Die einzelnen Module 410, 420 weisen jeweils Prozessoren auf, die dazu verwendet werden können, eine verteilte Verfahrenstechnik zu realisieren, um einen erhöhten Grad an Fehlersicherheit bereitzustellen. Die verteilte Verfahrenstechnik kann auch bei kostengünstiger Single Prozessor Architektur auf den Modulen 410, 402 eingesetzt werden und erlaubt es dabei trotzdem, über die Modulgrenzen mehrerer am Datenbus 401 eines Hausgeräts 400 vernetzter Module 410, 420, Redundanzen zwischen den einzelnen Modulen 410, 420 aufzubauen.

Insbesondere kann der Meta-Sprach-Interpreter 404 dazu verwendet werden, die Module 410, 420 eines Hausgeräts 400 Multi-Prozessor-fähig zu machen. Die Multi-Prozessor-Fähigkeit kann dadurch entstehen, dass der Meta-Sprach-Interpreter 404 auf jedem Hardware-Modul 410, 420 Sensor- und Aktuator-seitig durch einen Prozess-Kontroll-Manager 413, 423 und Datenbus-seitig durch einen Kommunikations-Manager 411, 421 gekapselt ist (wie in Fig. 4a dargestellt). Die auf dem jeweiligen Hardware-Modul 410, 420 laufende Meta-Sprach-Datei 402 "sieht" nicht, ob die Sensoren oder Aktuatoren tatsächlich an das jeweilige Hardware-Modul 410, 420 gekoppelt sind, oder über den Datenbus 410 zu dem jeweiligen Modul 410, 420 hin getunnelt sind. Folglich kann eine auf einem ersten Modul 410 ausgeführte Meta-Sprach-Datei 402 über den Datenbus 401 auf Hardware-Komponenten auf einem anderen Modul 420 zugreifen.

Beispielsweise können ein Benutzerschnittstellen-Modul 410 und ein Energie-Modul 420 verwendet werden, um die in einer Meta-Sprach-Datei 402 spezifizierte Verfahrenstechnik auszuführen. Dabei kann jedes der beiden Module 410, 420 jeweils einen Anteil der Steuerung der Verfahrenstechnik (z.B. 10% zu 90%, 50% zu 50% oder 90% zu 10%) übernehmen. Eine Gewichtung der Verfahrenstechnik-Last ist sinnvoll, um eine Balance zwischen einem leistungsfähigeren und einem weniger leistungsfähigen Prozessor zu schaffen und/oder um einen Prozessor bei teilweisem Versagen der Hardware kurz- bis mittelfristig zu entlasten und/oder um ein Hausgerät 400 ausbaufähig zu gestalten, d.h. um die elektronische Hardware update- und upgrade-fähig zu machen (z.B. für ein neues Display, neue Features, eine offene Architektur, etc.).

Dabei wird nicht die Multi-Core-Funktionalität auf einem Modul 410, 402 implementiert, sondern es werden die an einem Datenbus 410 eines Hausgeräts 400 angeschlossenen Prozessoren verwendet, um Multiprozessor-Funktionalität (dynamische Prozess-Lastverteilung zwischen den Controllern); Redundanz (Übernahme von Prozessleistung von einem Controller auf einem anderen Controller im Störfall) und/oder Fail Safety (Überwachung der Prozessabarbeitung zwischen zwei oder mehreren Controllern) bereitzustellen.

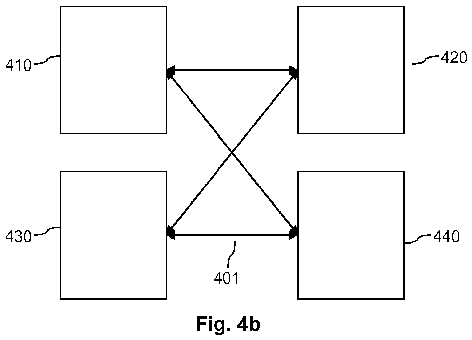

Fig. 4b zeigt beispielhaft ein Hausgerät 400, bei dem vier Module 410, 420, 430, 440 über einen Datenbus 410 miteinander verbunden sind. Dabei können z.B. zwei Module 420, 440 dazu verwendet werden, zwei vollständig redundante Meta-Sprach Prozess-Controller bereitzustellen, die beide die Verfahrenstechnik in gleichwertiger Form ausführen können. Des Weiteren kann ein Modul 410 dazu verwendet werden, einen Fail Save Controller (mit einem Meta-Sprach-Interpreter 404) bereitzustellen, der die fehlerfreie Ausführung der Prozesstechnik auf den Meta-Sprach Prozess-Controllern prüft und im Störfall eingreift. Außerdem kann ein Modul 430 dazu verwendet werden, einen Load Balance Controller (mit einem Meta-Sprach-Interpreter 404) bereitzustellen, der die Prozesslast und die Prozessabarbeitung im Regelbetrieb steuert.

Durch einen verteilten Meta-Sprach-Interpreter 404 kann eine gesteigerte Systemstabilität (insbesondere Multi-Prozessor-Funktionalität) bereitgestellt werden. Außerdem kann eine Fail Safety Funktionalität implementiert werden (das System arbeitet auch bei einem Hardware-Ausfall mit ggf. reduzierter Leistung weiter). Des Weiteren ermöglicht ein verteilter Meta-Sprach-Interpreter 404 eine erhöhte Fehlertoleranz (ein Load Balance Controller detektiert Prozessorüberlastungen durch kleine Programmfehler und korrigiert diese). Außerdem ermöglicht ein verteilter Meta-Sprach-Interpreter 404 eine Steigerung der Ausbaufähigkeit eines Hausgeräts 400. Ein weiterer Vorteil eines verteilten Systems ist die sichere Updatefähigkeit einzelner Softwaremodule. Da die zentrale Prozesssteuerung mehrfach vorhanden ist, ist ein erneutes Update einer Einzelkomponente möglich, auch wenn Systemkomponenten aufgrund eines fehlgeschlagenen Updates nicht verfügbar sind.

## Patentansprüche

1. System (100) zur Implementierung eines verfahrenstechnischen Prozesses auf einem Hausgerät (400), wobei das System (100) umfasst,
- einen graphischen Editor (101), der es ermöglicht, den verfahrenstechnischen Prozess anhand von graphischen Elementen (101, 102, 103, 104, 105, 106, 107, 108) zu beschreiben, um eine graphische Repräsentation des verfahrenstechnischen Prozesses zu erstellen;
- eine Übersetzereinheit (103), die eingerichtet ist, die einzelnen graphischen Elemente (101, 102, 103, 104, 105, 106, 107, 108) der graphischen Repräsentation des verfahrenstechnischen Prozesses in Anweisungen (302) einer Meta-Sprache zu überführen, um eine Meta-Sprach-Datei (402) zu erstellen, die den verfahrenstechnischen Prozess in der Meta-Sprache beschreibt; wobei die Meta-Sprache derart ausgelegt ist, dass mit der Meta-Sprache verfahrenstechnische Prozesse einer Vielzahl von Typen von Hausgeräten (400) beschrieben werden können;
- einen auf einem Hardware-Modul (410, 420) des Hausgeräts (400) angeordneten Interpreter (104, 404), der eingerichtet ist, die Anweisungen (302) der Meta-Sprach-Datei (402) in Hausgeräte-Typ-spezifischen Software Code zur Ausführung des verfahrenstechnischen Prozesses auf dem Hausgerät (400) zu überführen; wobei der Interpreter (104, 404) von dem Typ des Hausgeräts (400) aus der Vielzahl von Typen von Hausgeräten (400) abhängt; und
- eine Überprüfungseinheit (102), die eingerichtet ist, zu überprüfen, ob die graphische Repräsentation des verfahrenstechnischen Prozesses in dem Hausgerät (400) umgesetzt werden kann; wobei die Überprüfungseinheit (102) ein auf künstlicher Intelligenz basiertes Expertensystem umfasst, das eingerichtet ist, den anhand von graphischen Elementen (101, 102, 103, 104, 105, 106, 107, 108) beschriebenen verfahrenstechnischen Prozess auf Konsistenz und Integrität zu überprüfen.

2. System (100) gemäß einem der vorhergehenden Ansprüche, wobei
- die Meta-Sprache eine Vielzahl von unterschiedlichen Anweisungen umfasst;
- die Vielzahl von unterschiedlichen Anweisungel :
- einen Zugriff auf einen Sensor (425) des Hausgeräts (400) ermöglichen;
- eine Ansteuerung eines Aktuators (428) des Hausgeräts (400) ermöglichen;
- eine Verzögerung eines Prozessschrittes des verfahrenstechnischen Prozesses ermöglichen;
- eine bedingte Ausführung eines Prozessschrittes des verfahrenstechnischen Prozesses ermöglichen;
- einen Zugriff auf eine Eingabeeinheit (418) des Hausgeräts (400) ermöglichen; und/oder
- eine Ansteuerung einer Ausgabeeinheit (415) des Hausgeräts (400) ermöglichen.

3. System (100) gemäß einem der vorhergehenden Ansprüche, wobei die Vielzahl von Typen von Hausgeräten (400) insbesondere ein oder mehrere umfassen von: Waschmaschinen, Wäschetrockner, Kaffeevollautomaten, Spülmaschinen, Öfen, und/oder Kühlgeräte.

4. System (100) gemäß einem der vorhergehenden Ansprüche, wobei der Interpreter (104, 404) ein weiteres auf künstlicher Intelligenz basiertes Expertensystem umfasst, das eingerichtet ist, um Anweisungen (302) der Meta-Sprache in Hausgeräte-Typ-spezifischen Software Code zu überführen.

5. System (100) gemäß einem der vorhergehenden Ansprüche, wobei
- das Hausgerät (100) eine Mehrzahl von Hardware-Modulen (410, 420, 430, 440) mit jeweils ein oder mehreren Prozessoren umfasst; und
- die Hardware-Module (410, 420, 430, 440) jeweils einen Interpreter (104, 404) umfassen, um zumindest einen Teil der Anweisungen der Meta-Sprach-Datei (402) auszuführen.

## Claims

1. System (100) for implementing a technical process on a household appliance (400), wherein the system (100) comprises:
- a graphic editor (101) which makes it possible to describe the technical process using graphic elements (101, 102, 103, 104, 105, 106, 107, 108), in order to create a graphical representation of the technical process;
- a translator unit (103) which is intended to convert the individual graphic elements (101, 102, 103, 104, 105, 106, 107, 108) of the graphical representation of the technical process into instructions (302) of a metalanguage in order to generate a metalanguage file (402) that describes the technical process in the metalanguage; wherein the metalanguage is structured such that the metalanguage may be used to describe technical processes of a plurality of types of household appliance (400); and
- an interpreter (104, 404) which is arranged on a hardware module (410, 420) of the household appliance (400) and is intended to convert the instructions (302) of the metalanguage file (402) into software code that is specific to the household appliance type, for the purpose of executing the technical process on the household appliance (400); wherein the interpreter (104, 404) depends on the type of household appliance (400) of the plurality of types of household appliance (400); and
- a checking unit (102) which is intended to check whether the graphical representation of the technical process can be carried out in the household appliance (400); wherein the checking unit (102) comprises an expert system, based on artificial intelligence, which is intended to check the technical process described using graphic elements (101, 102, 103, 104, 105, 106, 107, 108) for consistency and integrity.

2. System (100) according to one of the preceding claims, wherein
- the metalanguage includes a plurality of different instructions;
- the plurality of different instructions enable:
- access to a sensor (425) of the household appliance (400);
- control of an actuator (428) of the household appliance (400);
- a delay to a process step of the technical process;
- conditional execution of a process step of the technical process;
- access to an input unit (418) of the household appliance (400); and/or
- control of an output unit (415) of the household appliance (400).

3. System (100) according to one of the preceding claims, wherein the plurality of types of household appliance (400) includes in particular one or more of:
washing machines, tumble dryers, automatic coffee makers, dishwashers, ovens and/or refrigerators.

4. System (100) according to one of the preceding claims, wherein the interpreter (104, 404) includes a further expert system, based on artificial intelligence, which is intended to convert the instructions (302) of the metalanguage file (402) into software code that is specific to the household appliance type.

5. System (100) according to one of the preceding claims, wherein
- the household appliance (100) comprises a plurality of hardware modules (410, 420, 430, 440) each having one or more processors; and
- the hardware modules (410, 420, 430, 440) each comprise an interpreter (104, 404) for the purpose of executing at least some of the instructions of the metalanguage file (402).

## Revendications

1. Système (100) destiné à la mise en œuvre d'un procédé d'ingénierie sur un appareil électroménager (400), dans lequel le système (100) comprend
- un éditeur graphique (101) qui permet de décrire le procédé d'ingénierie à l'aide d'éléments graphiques (101, 102, 103, 104, 105, 106, 107, 108) pour produire une représentation graphique du procédé d'ingénierie ;
- une unité de traduction (103) qui est configurée pour transmettre les éléments graphiques individuels (101, 102, 103, 104, 105, 106, 107, 108) de la représentation graphique du procédé d'ingénierie dans des instructions (302) d'un métalangage pour produire des données de métalangage (402) qui décrivent le procédé d'ingénierie dans le métalangage ; dans lequel le métalangage est conçu de telle sorte que des procédés d'ingénierie d'une pluralité de types d'appareils électroménagers (400) peuvent être décrits avec le métalangage ;
- un interprète (104, 404) disposé sur un module matériel (410, 420) de l'appareil électroménager (400) qui est conçu pour transmettre les instructions (302) des données de métalangage (402) dans un code logiciel spécifique au type d'appareil électroménager pour la réalisation du procédé d'ingénierie sur l'appareil électroménager (400) ; dans lequel l'interprète (104, 404) dépend du type de l'appareil électroménager (400) issu de la pluralité de types d'appareils électroménagers (400) ; et
- une unité de vérification (102) qui est configurée pour vérifier si la représentation graphique du procédé d'ingénierie peut être concrétisée dans l'appareil électroménager (400) ; dans lequel l'unité de vérification (102) comprend un système expert basé sur l'intelligence artificielle qui est conçu pour vérifier le procédé d'ingénierie décrit à l'aide d'éléments graphiques (101, 102, 103, 104, 105, 106, 107, 108) en termes de cohérence et d'intégrité.

2. Système (100) selon l'une des revendications précédentes, dans lequel
- le métalangage comprend une pluralité d'instructions différentes ;
- la pluralité d'instructions différentes :
- permet un accès à un capteur (425) de l'appareil électroménager (400) ;
- permet une commande d'un actionneur (428) de l'appareil électroménager (400) ;
- permet une temporisation d'une étape de procédé du procédé d'ingénierie ;
- permet une réalisation sous conditions d'une étape de procédé du procédé d'ingénierie ;
- permet un accès à une unité de saisie (418) de l'appareil électroménager (400) et/ou
- permet une commande d'une unité de restitution (415) de l'appareil électroménager (400).

3. Système (100) selon l'une des revendications précédentes, dans lequel la pluralité de types d'appareils électroménagers (400) comprend en particulier un ou plusieurs parmi : des lave-linges, des sèche-linges, des machines à café automatiques, des lave-vaisselle, des fours et/ou des appareils frigorifiques.

4. Système (100) selon l'une des revendications précédentes, dans lequel l'interprète (104, 404) comprend un autre système expert basé sur l'intelligence artificielle qui est conçu pour transmettre des instructions (302) du métalangage dans un code logiciel spécifique au type d'appareils électroménagers.

5. Système (100) selon l'une des revendications précédentes, dans lequel
- l'appareil électroménager (100) comprend une pluralité de modules matériels (410, 420, 430, 440) avec respectivement un ou plusieurs processeurs ; et
- les modules matériels (410, 420, 430, 440) comprennent respectivement un interprète (104, 404) pour exécuter au moins une partie des instructions des données de métalangage (402).
